# EUROPEAN PATENT APPLICATION

(11) **EP 3 651 109 A1**
(43) Date of publication of application: **13.05.2020**
(21) Application number: 19207323.7
(22) Date of filing: 05.11.2019
(51) Int. Cl.: G06Q 30/08

(54) **SYSTEMS AND METHODS FOR ELECTRONICALLY ENABLING CONDITIONAL TRANSACTIONS OF AEROSPACE EQUIPMENT PARTS**

(30) Priority: 09.11.2018 US 201862758255 P; 31.07.2019 US 201916527175
(71) Applicant: Honeywell International Inc., Morris Plains, NJ 07950 (US)
(72) Inventor: BUTTERS, Lisa Estipona, Morris Plains, NJ New Jersey 07950 (US); SOLIS, Matthew, Morris Plains, NJ New Jersey 07950 (US); MINYARD, Jason, Morris Plains, NJ New Jersey 07950 (US); HUMPHERYS, Grant, Morris Plains, NJ New Jersey 07950 (US); DOTY, Keith, Morris Plains, NJ New Jersey 07950 (US)
(74) Representative: Haseltine Lake Kempner LLP

(57) **Abstract**

Disclosed are methods, systems, and non-transitory computer-readable medium for electronically listing parts at an online platform using electronic data files and processing conditional transaction requests. For example, a method may include receiving, from a first user device of an owner of the equipment, a request to list the equipment on the online platform prior to dismantling the equipment; in response to the request to list the equipment, receiving one or more manifest data files associated with parts of the equipment; generating one or more listings at the online platform based on the received one or more manifest data files; receiving a conditional transaction request associated with the one or more listings from a second user device in communication with the online platform, to generate a conditional transaction; and determining a transaction status of the conditional transaction after the equipment has been dismantled.

## Description

### TECHNICAL FIELD

Various embodiments of the present disclosure generally relate to enabling conditional transactions of equipment parts, and more particularly, to electronically listing parts at an online platform using electronic data files and processing conditional transaction requests.

### BACKGROUND

When equipment or a vehicle having reusable parts has reached the end of its life (e.g., an aircraft scheduled to be decommissioned and dismantled), parts may be harvested from the equipment and become available for electronic transactions. However, a dismantlement process may often consume a significant amount of resources, such as time and labor. For example, the time period between the dismantlement and availability of an aircraft part may generally take several months. Thus, while there are benefits in engaging in electronic transactions of harvested parts, there may be a substantial delay in realizing those benefits. Hence, there is a need for an equipment online marketplace platform, in which equipment parts may become available for electronic transactions without any delay associated with the physical dismantlement process of the equipment.

The background description provided herein is for the purpose of generally presenting the context of the disclosure. Unless otherwise indicated herein, the materials described in this section are not prior art to the claims in this application and are not admitted to be prior art, or suggestions of the prior art, by inclusion in this section.

### SUMMARY OF THE DISCLOSURE

According to certain aspects of the disclosure, systems and methods disclosed relate to electronically listing parts at an online platform using electronic data files and processing conditional transaction requests.

In one embodiment, a computer-implemented method is disclosed for listing parts at an online platform prior to a dismantlement of equipment. The computer-implemented method may comprise: receiving, from a first user device of an owner of the equipment, a request to list the equipment on the online platform prior to dismantling the equipment; in response to the request to list the equipment, receiving, by one or more processors, one or more manifest data files associated with parts of the equipment; generating, by the one or more processors, one or more listings at the online platform based on the received one or more manifest data files; receiving, by the one or more processors, a conditional transaction request associated with the one or more listings from a second user device in communication with the online platform, to generate a conditional transaction; and determining, by the one or more processors, a transaction status of the conditional transaction after the equipment has been dismantled.

In accordance with another embodiment, a computer system is disclosed for listing parts at an online platform prior to a dismantlement of equipment. The computer system may comprise: a memory having processor-readable instructions stored therein; and at least one processor configured to access the memory and execute the processor-readable instructions, which when executed by the at least one processor configures the at least one processor to perform a plurality of functions, including functions for: receiving, from a first user device of an owner of the equipment, a request to list the equipment on the online platform prior to dismantling the equipment; in response to the request to list the equipment, receiving one or more manifest data files associated with parts of the equipment; generating one or more listings at the online platform based on the received one or more manifest data files; receiving a conditional transaction request associated with the one or more listings from a second user device in communication with the online platform, to generate a conditional transaction; and determining a transaction status of the conditional transaction after the equipment has been dismantled.

In accordance with another embodiment, a non-transitory computer-readable medium containing instructions is disclosed for listing parts at an online platform prior to a dismantlement of equipment. The non-transitory computer-readable medium may comprise instructions for: receiving, from a user device of an owner of the equipment, a request to list the equipment on the online platform prior to dismantling the equipment; in response to the request to list the equipment, receiving one or more manifest data files associated with parts of the equipment; generating one or more listings at the online platform based on the received one or more manifest data files; receiving a conditional transaction request associated with the one or more listings from a second user device in communication with the online platform, to generate a conditional transaction; and determining a transaction status of the conditional transaction after the equipment has been dismantled.

### BRIEF DESCRIPTION OF THE DRAWINGS

The accompanying drawings, which are incorporated in and constitute a part of this specification, illustrate various exemplary embodiments and together with the description, serve to explain the principles of the disclosed embodiments.
FIG. 1 depicts an example environment in which methods, systems, and other aspects of the present disclosure may be implemented.
FIG. 2 depicts a flowchart of an exemplary method for listing parts at an online platform prior to dismantlement of equipment, according to one or more embodiments.
FIG. 3 depicts a simplified screen shot of an exemplary seller interface for obtaining a seller's listing preferences on a particular item of equipment, according to one or more embodiments.
FIG. 4 depicts a simplified screen shot of an exemplary buyer interface for providing a list of parts available for purchase, according to one or more embodiments.

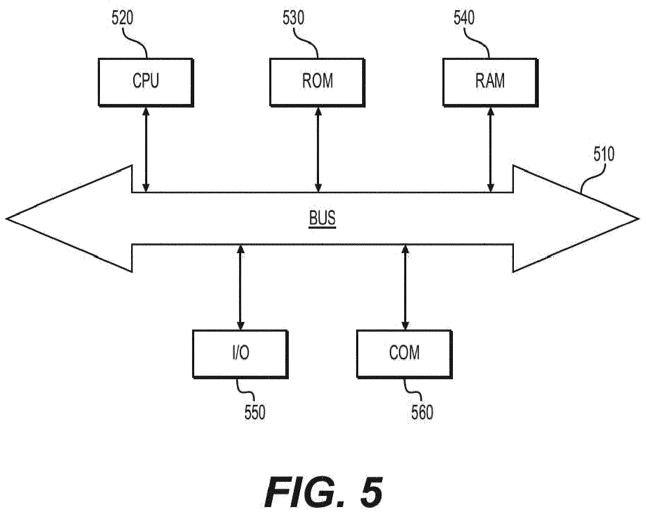

FIG. 5 depicts an exemplary computer device or system, in which embodiments of the present disclosure, or portions thereof, may be implemented.

### DETAILED DESCRIPTION

The following embodiments describe systems and methods for electronically listing equipment parts, such as aerospace or vehicle parts, at an equipment online marketplace platform prior to dismantlement of equipment, and processing conditional transactions on the listed parts based on the dismantlement and/or electronic data files associated therewith. As described above, there is a need for an equipment online marketplace platform specifically designed and implemented such that equipment parts may become available for electronic transactions without any delay associated with the physical dismantlement process of the equipment.

In order to efficiently and accurately list equipment parts at this stage, the embodiments of the present disclosure may provide an electronic platform interface that allows each user to make detailed selections on the interface regarding the user's listing preferences, and automatically and electronically generate individual listings that incorporate the uniquely selected preferences for electronic transactions on the platform. For example, the platform may allow a user to select a different hierarchical level of parts for each part being listed, and uniquely automate the process of generating one or more listings using the hierarchical level selections as a rule for such automation. Such automations are necessarily rooted in technology of centrally networked transaction platforms, and improve the functioning of the network and/or the connected devices by removing technical bottlenecks resulting from maintaining separate listings of unclaimed parts (e.g., the unsold parts arising from not being able to list based on hierarchical level selections). In addition, after an electronic listing becomes active, the platform may receive conditional transaction requests from other connected devices, which may automatically be converted to a conditional transaction or even a finalized transaction or a cancelled transaction depending on various data files associated with the equipment's dismantlement process. These automatic conversions are necessarily rooted in technology of managing data files of transactions in centrally networked transaction platforms, and improve the functioning of the network and/or the connected devices by saving memory space and computing resources from having to maintain transaction requests in the networked system indefinitely until manual actions are taken based on consensus reached among all interested parties.

The subject matter of the present description will now be described more fully hereinafter with reference to the accompanying drawings, which form a part thereof, and which show, by way of illustration, specific exemplary embodiments. An embodiment or implementation described herein as "exemplary" is not to be construed as preferred or advantageous, for example, over other embodiments or implementations; rather, it is intended to reflect or indicate that the embodiment(s) is/are "example" embodiment(s). Subject matter can be embodied in a variety of different forms and, therefore, covered or claimed subject matter is intended to be construed as not being limited to any exemplary embodiments set forth herein; exemplary embodiments are provided merely to be illustrative. Likewise, a reasonably broad scope for claimed or covered subject matter is intended. Among other things, for example, subject matter may be embodied as methods, devices, components, or systems. Accordingly, embodiments may, for example, take the form of hardware, software, firmware, or any combination thereof (other than software per se). The following detailed description is, therefore, not intended to be taken in a limiting sense.

Throughout the specification and claims, terms may have nuanced meanings suggested or implied in context beyond an explicitly stated meaning. Likewise, the phrase "in one embodiment" as used herein does not necessarily refer to the same embodiment and the phrase "in another embodiment" as used herein does not necessarily refer to a different embodiment. It is intended, for example, that claimed subject matter include combinations of exemplary embodiments in whole or in part.

The terminology used below may be interpreted in its broadest reasonable manner, even though it is being used in conjunction with a detailed description of certain specific examples of the present disclosure. For example, equipment, as used herein throughout the present disclosure, may include products or services traded in primary and secondary marketplaces among organizations. As such, equipment may include, for example, aircraft, aerospace parts and components, time-constrained equipment/services such as airline gates or airport runways, or any other aerospace-related product or service traded among airlines, airports, aircraft, or aerospace original equipment manufacturers (OEMs). While the exemplary equipment online marketplace platform of the present disclosure relates to aerospace-related equipment, equipment may also include any other type of vehicles, vehicle parts and components, vehicle services, heavy equipment, heavy equipment parts and components, heavy equipment services, computing devices, computing device parts and components, computing device services, or any other products or services traded between businesses and individuals through primary and secondary marketplaces.

Certain terms may even be emphasized below; however, any terminology intended to be interpreted in any restricted manner will be overtly and specifically defined as such in this Detailed Description section. Both the foregoing general description and the following detailed description are exemplary and explanatory only and are not restrictive of the features, as claimed.

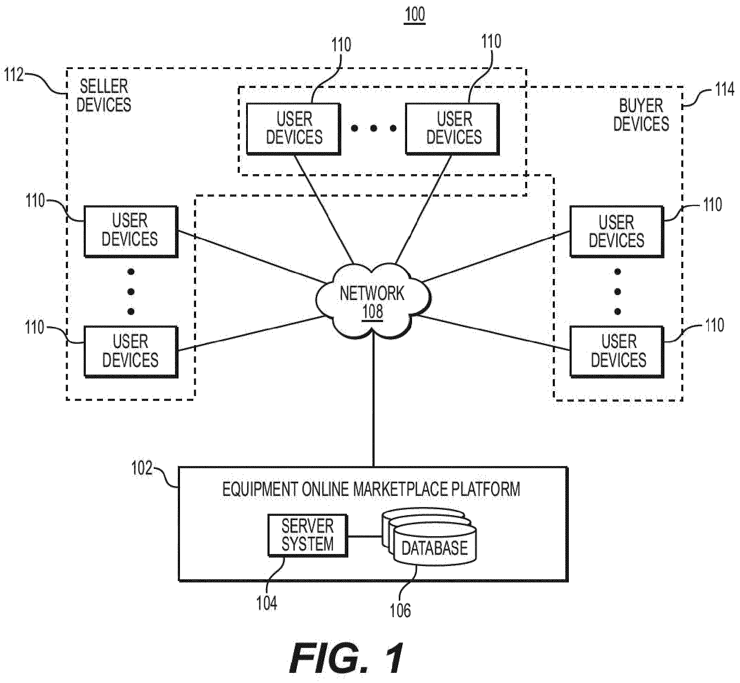

Referring now to the appended drawings, FIG. 1 depicts a block diagram of a system 100 for an equipment online marketplace, according to aspects of the disclosure. As shown in FIG. 1, the system 100 for an equipment online marketplace may include an equipment online marketplace platform 102, such as an aerospace parts online marketplace platform, including server systems 104 and electronic databases 106. The server systems 104 may store and execute the equipment online marketplace platform 102 for use through a network 108, such as the Internet. The equipment online marketplace platform 102 may be implemented through one or more server systems 104, such as an application program interface (API) server, web page servers, image servers, listing servers, processing servers, search servers, or other types of front-end or back-end servers.

Users may access the equipment online marketplace through the network 108 by user devices 110, such as a computing device or the like. User devices 110 may allow a user to display a web browser for accessing the equipment online marketplace from the server system 104 through the network 108. The user devices 110 may be any type of device for accessing web pages, such as personal computing device, mobile computing devices, or the like. User devices 110 may be seller devices 112 or buyer devices 114. As such, users may be sellers and/or buyers through the equipment online marketplace. As further shown in FIG. 1, in some cases, user devices 110 may be both seller devices 112 and buyer devices 114. Thus, users may access the equipment online marketplace as both sellers and buyers.

Further, the equipment online marketplace may include a seller interface and a buyer interface. In some implementations, the buyer interface may be referred to as the first user interface, and the seller interface may be referred to as the second user interface. The seller interface may be displayed to a user accessing the equipment online marketplace as a seller on a user device 110. The seller interface may, for example, include features to enable a seller to enter, or input, the information of the vehicle, aerospace, or equipment part that the seller desires to sell through the equipment online marketplace. For example, the seller interface may allow a seller to create, edit, or delete equipment listings based on the information of a corresponding vehicle, aerospace, or equipment part. The buyer interface may be displayed to a user accessing the equipment online marketplace as a buyer on a user device 110. The buyer interface may include features to enable a buyer to search for, select, and/or purchase equipment from an equipment listing created by a seller. As discussed above, the equipment online marketplace may facilitate equipment purchase transactions using various features, as further described below.

As indicated above, FIG. 1 is provided merely as an example. Other examples are possible and may differ from system 100 of FIG. 1. In addition, the number and arrangement of devices and networks shown in system 100 are provided as an example. In practice, there may be additional devices, fewer devices and/or networks, different devices and/or networks, or differently arranged devices and/or networks than those shown in system 100. Furthermore, two or more devices shown in FIG. 1 may be implemented within a single device, or a single device shown in FIG. 1 may be implemented as multiple, distributed devices. Additionally, or alternatively, one or more user devices in system 100 may perform one or more functions of the server system 104 and/or the equipment online marketplace platform 102.

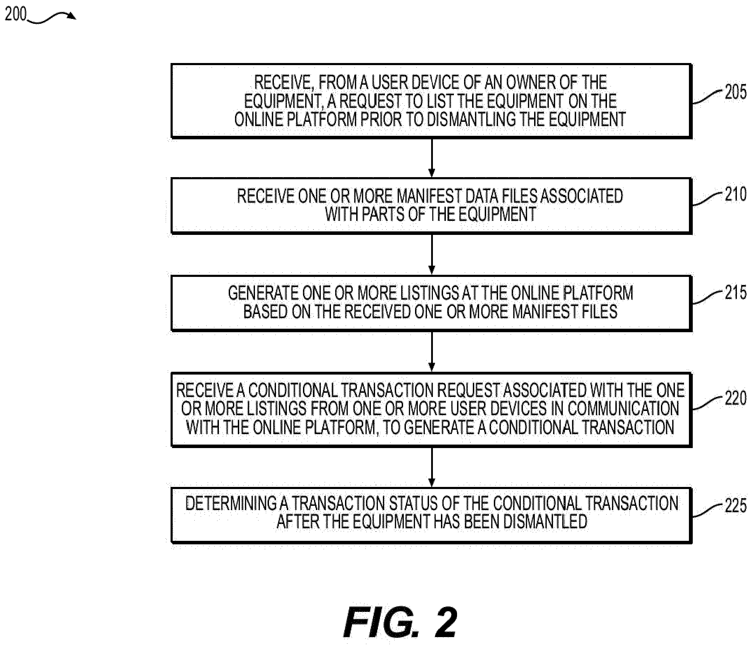

FIG. 2 depicts a flowchart of an exemplary method 200 for listing parts at an online platform prior to a dismantlement of equipment, according to one or more embodiments. One or more owners of equipment (e.g., an aircraft or a vehicle) may decide that the equipment needs to be decommissioned and dismantled. Based on this decision, the server system 104 may receive a request to list the equipment on the platform prior to dismantling the equipment (Step 205). The request may be transmitted, for example, from a user device of an owner of the equipment, such as a user device 110. In some implementations, such a request may occur prior to initiating a physical dismantlement process of the equipment. Additionally, or alternatively, receiving and processing of such a request may occur independently of the progress of the physical dismantlement of the equipment.

In response to the request, the server system 104 may receive one or more manifests associated with parts of the equipment (Step 210). The manifests may be, for example, electronic data files transmitted to the equipment online marketplace platform 102. The manifests may be received, for example, from a user device of an owner of the equipment, a user device of a seller (e.g., an agent authorized as a seller), or a third party entity associated with the equipment (e.g., a manufacturer of the equipment, a lessee of the equipment, one or more manufacturers of parts of the equipment, etc.).

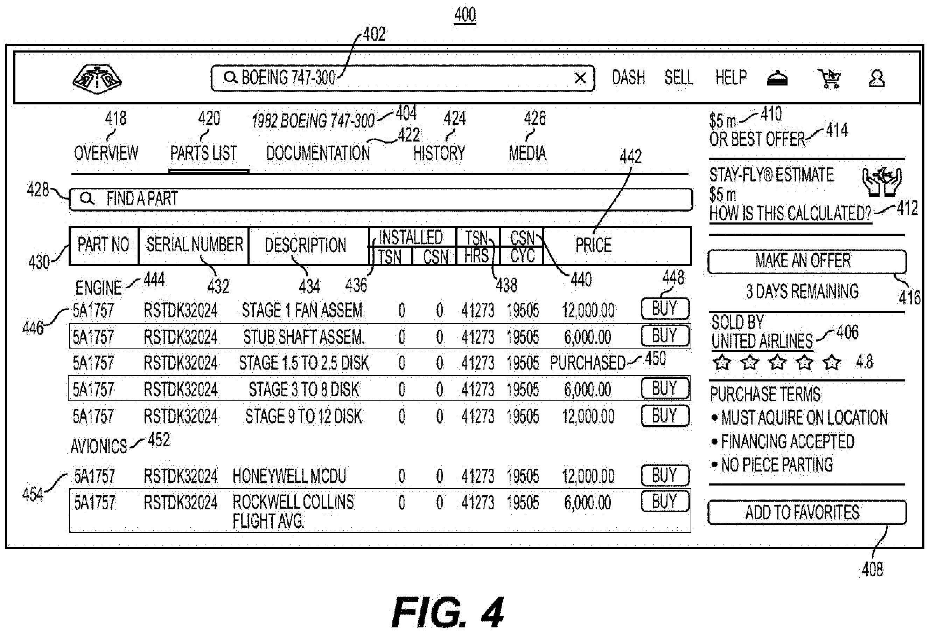

Based on the manifests, the server system 104 may generate one or more listings (Step 215). The server system 104 and/or the operators of the server system 104 may select one or more parts to be listed on the equipment online marketplace platform 102. For example, the selection of parts to be listed may be performed by input(s) from users at one or more user devices 110 (e.g., devices of a seller and/or an agent authorized as a seller), input(s) made by an operator of the server system 104, and/or a preconfigured criteria being applied by the server system 104. A generated listing for a part may include one or more attributes of the part, as illustrated in the exemplary interface 400 depicted in FIG. 4 and described in more detail below. A selection and configuration of listing attributes may be performed, for example, by a data import from manifest data files, input(s) made at a user device 110 (e.g., a user device of a seller or an agent authorized as a seller), input(s) made by an operator of the server system 104, and/or a preconfigured criteria being applied by the server system 104. Attributes listed may be, for example, a part number, serial number, description, time since new, cycles since new, a proposed starting price, a firm price, and/or part availability information. The generated listings may display those attributes on the buyer interface of the equipment online marketplace platform 102. An example of visual representations of such attributes on the buyer interface is depicted in FIG. 4, as described in more detail below.

In some implementations, the server system 104 may provide users of user devices 110 (e.g., devices of a seller and/or an agent authorized as a seller) with an option to group individual parts of equipment into an equipment subsystem, to generate a listing of a whole equipment subsystem. For example, a user may opt to list a whole compressor of an aircraft engine, rather than listing individual parts of the compressor (e.g., individual rotating blades or stator vanes). After a transaction is completed for such a listing, the seller and the buyer may optionally agree to transfer ownership of the whole subsystem (compressor) without physically separating or harvesting individual parts of the subsystem. Foregoing the physical dismantling process of a part this way may be advantageous to both parties to the transaction, because, for example, the seller may save the cost of dismantlement and the buyer may be able to obtain the subsystem sooner. Alternatively, the parties may also agree to dismantle the subsystem, in order to, for example, inspect, and/or verify terms of the transaction, such as the physical condition of certain parts of an equipment subsystem.

In some implementations, the server system 104 may provide users of user devices 110 (e.g., devices of a seller and/or an agent authorized as a seller) with an option to group individual parts of an equipment into an equipment system, to generate a listing of a whole equipment system. An equipment system, as used herein, may be a superset of an equipment subsystem. Alternatively, an equipment system may be equal to an equipment subsystem. For example, a user may opt to list a whole engine of an aircraft, rather than listing individual parts (e.g., individual rotating blades of a compressor within the engine) or listing a subsystem (e.g., a compressor within the engine). After a transaction is completed for such a listing, the seller and the buyer of the transaction may optionally agree to transfer ownership of the whole system (e.g., engine) without physically harvesting parts or subsystems of the whole system. Alternatively, the parties may also agree to dismantle the subsystem (e.g., for purposes of inspection or verification).

Additionally the server system 104 may provide users with an option to generate a plurality of different listings, as different variants including common parts. For example, a user seeking to sell an engine of an aircraft at a seller interface may request (i) a listing of a first rotating blade, (ii) a listing of a compressor including the first rotating blade, and (iii) a listing of a whole engine which includes the first rotating blade at its compressor to be generated and displayed concurrently at the buyer interface. If multiple different variants are concurrently listed this way, when one of these listings is flagged as sold or conditionally sold, the server system 104 may modify or remove the other variant listings which contain this sold part, in order to prevent any purchase attempt of an already-purchased part.

Based on the listings generated and displayed on the buyer interface, the server system 104 may receive conditional transaction requests from one or more user devices 110 in communication with the equipment online marketplace platform 102 (Step 220). In some implementations, a conditional transaction request may be, for example, a pre-order of a listed part (e.g., an individual part, an equipment subsystem, or an equipment system) from an interested buyer at the buyer interface. A conditional transaction request may be a purchase request bearing a condition, with the condition being, for example, that an agreement (e.g., availability, physical condition of the part revealed after the part is harvested, price, and/or any other term of an agreement) is reached between the seller and the buyer after harvesting and/or inspection of the parts.

For listings of pre-harvest equipment parts, the equipment online marketplace platform 102 may provide options to apply flexible or dynamic pricing schemes to the transactions arising from these listings. For example, some equipment parts may be listed with a proposed starting price, and the parties (e.g., the buyer and the seller for the particular listing) may negotiate the price upward or downward later as more attributes are revealed to the parties about the equipment parts (e.g., physical condition of the part being revealed after harvesting and inspection). Alternatively, a listing may set a fixed pricing scheme for the item(s) listed, such that the parties may agree on the outset (e.g., at the time of accepting conditional transaction request) that a part maintains a firm price even after the harvesting or inspection of the part. For the listings with fixed pricing applied thereto, the conditional transaction may still be conditional in nature, because the transaction may be cancelled or voided later based on various other attributes (e.g., a physical condition of the equipment part, an unreasonable delay in the procurement timeline, or any other attribute which may trigger an initiation of a cancellation).

In some implementations, the server system 104 may accept a deposit payment from a potential buyer, in order to proceed with the conditional transaction from the potential buyer (e.g., reserve the part for the potential buyer). Such a deposit payment may be accepted at the buyer interface of the potential buyer. The deposit payment may, for example, include an amount based on a predefined rule (e.g., a predefined percentage of a starting price, a set amount, etc.). The role of a deposit payment may be to tentatively bind the parties to a recorded conditional transaction, until the final outcome of the conditional transaction is decided by the parties. The final outcome may be (i) that the conditional transaction becomes a finalized transaction because the condition(s) are satisfied, and (ii) that the conditional transaction is voided, for reasons such as a decision to scrap the part or a lack of agreement between the parties.

Once a conditional transaction request results in a conditional transaction, the listing associated with the conditional transaction may remain pending until further action is initiated by a buyer, a seller, a part dismantling entity associated with the listing, and/or data files associated with any of these parties. Additionally, or alternatively, the server system 104 may automatically detect such further action and convert the conditional transaction to a finalized transaction or to a cancelled transaction. A further action which may affect the pending status of the listing at this stage may be, for example, a cancellation decision which overrides the conditional transaction (e.g., a seller's decision to keep the part, scrap the part, or sell it in another transaction).

Another example of the further action may be a communication from a part dismantling entity, with information regarding dismantlement of the listed equipment part. For example, a dismantling entity may communicate, over network 108 to one or more user devices 110 or to the equipment online marketplace platform 102, detailed data files associated with the dismantlement of the part, such as one or more product images, a removal tag (e.g., an image of removal tag and/or a data file documenting removal), an identifier of the part read during dismantlement, a physical condition of the part, any immediate decision to scrap a part, etc. The detailed data files may also be written to a shared database (e.g., database 106) or a shared ledger, as a blockchain entry or any other type of database entry, because recording such dismantlement data as blockchain entry may enhance the trust among all interested parties regarding the validity and reliability of the data. If a communication from a part dismantling entity prompts the transaction parties to finalize the transaction (e.g., data files being automatically read by the server system 104 and automatically results in a decision of the server system 104 to proceed or cancel the transaction), the status of the conditional transaction may be modified to either (i) finalizing the purchase based on satisfied condition(s), or (ii) voiding the conditional transaction all together.

The server system 104 may initiate a determination of a transaction status of the conditional transaction (Step 225). The determining of the transaction status may include determining at least one of a final price for the listing and a decision to scrap one or more parts listed in the listing. The final price of a listing may be determined using at least the server system 104, based on at least one of: a price indicated in the listing, a valuation result of the part, a dismantlement or inspection result of the part, a bid from a customer at the online platform, and an offer for negotiation by a buyer or a seller. For example, the final price may be a price formed by adjusting the proposed starting price through a negotiation process between a buyer and a seller. A decision to scrap one or more parts listed in the listing may be determined based on the communication or the recordation from the part dismantling entity (e.g., communication regarding the physical conditions observed after dismantling the part), as described above with respect to Step 220. In response to the decision to scrap one or more parts in a listing, the server system 104 may issue a refund and/or cancellation of the conditional transaction, to a user device (e.g., a device of a buyer or a party authorized to receive refund and/or cancellation).

Although FIG. 2 shows example blocks of method 200, in some implementations, method 200 may include additional blocks, fewer blocks, different blocks, or differently arranged blocks than those depicted in FIG. 2. Additionally, or alternatively, two or more of the blocks of method 200 may be performed in parallel.

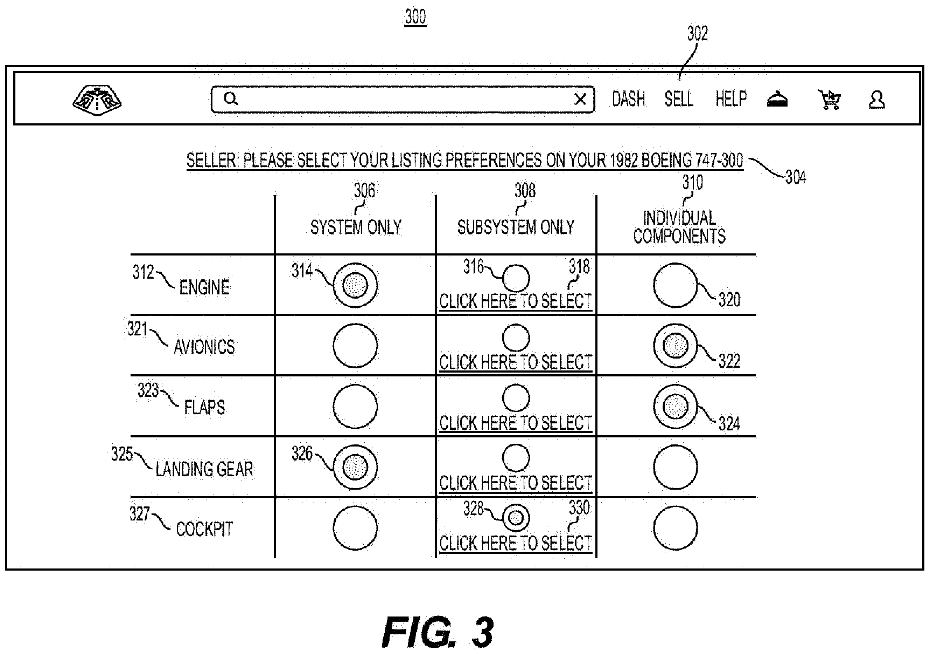

FIG. 3 depicts a simplified screen shot of an exemplary seller interface 300 for obtaining a seller's listing preferences on a particular item of equipment, according to one or more embodiments. A seller may reach the exemplary seller interface 300 by, for example, connecting to the equipment online marketplace platform 102 via a user device 110 on network 108, entering a seller interface subsystem (e.g., by selecting "SELL" link 302), inputting the model of the equipment (e.g., "1982 BOEING 747-300" in the confirmation text 304), and also inputting the equipment systems associated with the equipment (e.g., engine 312, avionics 321, flaps 323, landing gear 325, and cockpit 327, etc.). In accordance with the present disclosure, an equipment system may be the equipment parts at the highest level, an equipment subsystem may be the equipment parts at an intermediate level, and the individual components may be the parts at the bottom level of the hierarchy, in a hierarchical categorization of parts of equipment.

In response to receiving the equipment systems from a user, the server system 104 may display the exemplary seller interface 300 which allows a user to select the user's listing preferences, for each of the equipment systems. For example, for an engine, the user may be prompted to select one of multiple options: (i) an option to list the whole system as "system only" 306, (ii) an option to list one or more whole subsystems of an engine (e.g., compressor, turbine, etc.) as "subsystem only" 308, and (iii) an option to list all individual components 310. The selection among these three options may be accepted, for example, as radio buttons 314, 316, and 320, respectively. Under an option to select "subsystem only" 308, the exemplary seller interface 300 may also present the user with a link 318, which directs the user to an interface where one or more subsystems to list may be selected. In the exemplary seller interface 300 shown, the depicted user selections 314, 322, 324, 326, and 328 indicate that this example user chose to list the engine 312 and landing gear 325 as whole systems, list the cockpit 327 components as whole subsystems chosen via link 330, and list the components of avionics 321 and flaps 323 in separate, individual listings. While the exemplary seller interface 300 depicts three hierarchical levels to choose from, the number of hierarchical levels may vary at the seller interface, and the seller interface may also be customized or preconfigured with any number of hierarchical levels.

Additionally, or alternatively, the server system 104 may allow users to generate a plurality of listings as different variants including common parts, as described in detail above with respect to FIG. 2. For example, the server system 104 may allow a user to select "system only" 306 for engine 312, and also concurrently allow the user to select "individual components" 310 for the same engine 312 for another, distinct listing. In this way, if a first rotating blade in a separate individual listing has been sold, the separate listing directed to the whole engine may be removed from the equipment online marketplace platform 102, in order to prevent any purchase attempt of the already-purchased first rotating blade. In an interface which allows users to select multiple different variants including common parts, the selection tools (e.g., 314, 316, and 320) may be checkboxes, or selection tools of any other type which concurrently allow multiple selections.

As indicated above, FIG. 3 is provided merely as an example interface. Other examples (e.g., differently arranged interface) are possible and may differ in arrangement, form, or design from what was described with regard to FIG. 3.

FIG. 4 depicts a simplified screen shot of an exemplary buyer interface 400 for providing a list of parts available for purchase, according to one or more embodiments. A buyer may reach the exemplary buyer interface 400 by, for example, connecting to the equipment online marketplace platform 102 via a user device 110 on network 108, entering a buyer interface subsystem, and entering an attribute of a desired equipment model to search for (e.g., typing in "BOEING 747-300" at search box 402, or any other method of entering/selecting an attribute). In response to the search, search results corresponding to matching equipment, such as the resulting parts list 420, may be displayed at the user device 110, as shown in FIG. 4. Along with the search results, the exemplary buyer interface 400 may display, for example, an indicator 404 of the exact equipment model which corresponds to the equipment search results, a seller information 406 of the equipment, and an interactive feature 408 for the user to create a shortcut for this particular equipment parts list for purposes of revisiting. Additionally, the exemplary buyer interface 400 may present, for example, a separate listing specifically for purchasing the entire equipment (e.g., the entire airplane indicated by 404), using indications of a proposed price 410, a buyer offer solicitation 414, and an elaboration of the proposed price 412, as well as an interactive feature 416 for making an offer on the entire equipment.

The search result shown in the exemplary buyer interface 400 may additionally present the user with an interface to navigate through different types of information regarding the matching equipment (e.g., tabs with labels, with embedded functions of allowing access to overview 418, parts list 420, documentation 422, history 424, and media 426). The user may, for example, select the tab representing parts list 420 of the matching equipment. In response, a list of parts, organized by attributes (e.g., in tabular format), may be displayed at the exemplary buyer interface 400, along with, for example, an interactive feature 428 that allows a user to search within the parts list. The exemplary buyer interface 400 may allow users to sort the parts list by a certain attribute (e.g., clicking on part number header 430 may sort the parts list by the part number attribute in an ascending order). Additionally, the exemplary buyer interface 400 may include a scroll bar, or any other widget which enables users to display any additional data that could not fit in the window or screen.

The parts list may display various attributes of the listed parts, such as a part number 430, serial number 432, description 434, time and cycles since installation 436, time since new 438, cycles since new 440, and a proposed starting price 442. The arrangement and a selection of the display of these attributes may be customized by a buyer at the equipment online marketplace platform 102 in accordance with the buyer's attribute view preferences. Additionally, or alternatively, the arrangement and the selection of these attributes may be a result of a file format imported from the manifest data files, input(s) made at a seller interface (e.g., by a seller or an agent authorized as a seller), input(s) made by an operator of the server system 104, and/or a preconfigured criteria being applied at the server system 104.

In the exemplary buyer interface 400, listings associated with engine 444 and avionics 452 are shown as example listings. The listings in this parts list may have been generated in response to a seller's selection (e.g., a selection in the seller interface such as the exemplary seller interface 300 depicted in FIG. 3), to list the engine of the airplane by individual components. For example, a part 446 with description "stage 1 fan assembly," may be listed as shown in the exemplary buyer interface 400, as an individual component at a proposed starting price of $12,000.00. This listing may also indicate the attributes, such as part number, serial number, time and cycles since installation, time since new, and cycles since new, of the part 446. After reviewing these attributes of the 446, a buyer may pre-order this component by, for example, pressing the "BUY" button 448. For a listing with a pending conditional transaction, the exemplary buyer interface 400 may hide the price attribute and the "BUY" button 448 from the listing, and replace those fields with a text indication that this listing is no longer available for a conditional transaction request (e.g., "PURCHASED" sign 450). In this way, a user may be allowed only to pre-order available parts such as parts 446 and 454.

As indicated above, FIG. 4 is provided merely as an example interface. Other examples (e.g., differently arranged interface) are possible and may differ in arrangement, form, or design from what was described with regard to FIG. 4.

If programmable logic is used, such logic may execute on a commercially available processing platform or a special purpose device. One of ordinary skill in the art may appreciate that embodiments of the disclosed subject matter can be practiced with various computer system configurations, including multi-core multiprocessor systems, minicomputers, mainframe computers, computer linked or clustered with distributed functions, as well as pervasive or miniature computers that may be embedded into virtually any device.

For instance, at least one processor device and a memory may be used to implement the above-described embodiments. A processor device may be a single processor, a plurality of processors, or combinations thereof. Processor devices may have one or more processor "cores."

Various embodiments of the present disclosure, as described above in the examples of FIGS. 1-4 may be implemented using a processor device. After reading this description, it will become apparent to a person skilled in the relevant art how to implement embodiments of the present disclosure using other computer systems and/or computer architectures. Although operations may be described as a sequential process, some of the operations may in fact be performed in parallel, concurrently, and/or in a distributed environment, and with program code stored locally or remotely for access by single or multiprocessor machines. In addition, in some embodiments the order of operations may be rearranged without departing from the spirit of the disclosed subject matter.

A device used for accessing the equipment online marketplace platform, such as user device 110 or the server system 104, may include a central processing unit (CPU). CPU may be any type of processor device including, for example, any type of special purpose or a general-purpose microprocessor device. As will be appreciated by persons skilled in the relevant art, CPU also may be a single processor in a multi-core/multiprocessor system, such system operating alone, or in a cluster of computing devices operating in a cluster or server farm. CPU may be connected to a data communication infrastructure, for example, a bus, message queue, network, or multi-core message-passing scheme.

A device used for accessing the equipment online marketplace platform, such as user device 110 or the server system 104, may also include a main memory, for example, random access memory (RAM), and may also include a secondary memory 630. Secondary memory, e.g., a read-only memory (ROM), may be, for example, a hard disk drive or a removable storage drive. Such a removable storage drive may comprise, for example, a floppy disk drive, a magnetic tape drive, an optical disk drive, a flash memory, or the like. The removable storage drive in this example reads from and/or writes to a removable storage unit in a well-known manner. The removable storage unit may comprise a floppy disk, magnetic tape, optical disk, etc., which is read by and written to by the removable storage drive. As will be appreciated by persons skilled in the relevant art, such a removable storage unit generally includes a computer usable storage medium having stored therein computer software and/or data.

In alternative implementations, secondary memory may include other similar means for allowing computer programs or other instructions to be loaded into device. Examples of such means may include a program cartridge and cartridge interface (such as that found in video game devices), a removable memory chip (such as an EPROM, or PROM) and associated socket, and other removable storage units and interfaces, which allow software and data to be transferred from a removable storage unit to device.

A device used for accessing the equipment online marketplace platform, such as user device 110 or the server system 104, may also include a communications interface ("COM"). Communications interface allows software and data to be transferred between device and external devices. Communications interface may include a modem, a network interface (such as an Ethernet card), a communications port, a PCMCIA slot and card, or the like. Software and data transferred via communications interface may be in the form of signals, which may be electronic, electromagnetic, optical, or other signals capable of being received by communications interface. These signals may be provided to communications interface via a communications path of device, which may be implemented using, for example, wire or cable, fiber optics, a phone line, a cellular phone link, an RF link or other communications channels.

The hardware elements, operating systems and programming languages of such equipment are conventional in nature, and it is presumed that those skilled in the art are adequately familiar therewith. A device used for accessing the equipment online marketplace platform also may include input and output ports to connect with input and output devices such as keyboards, mice, touchscreens, monitors, displays, etc. Of course, the various server functions may be implemented in a distributed fashion on a number of similar platforms, to distribute the processing load. Alternatively, the servers may be implemented by appropriate programming of one computer hardware platform.

The systems, apparatuses, devices, and methods disclosed herein are described in detail by way of examples and with reference to the figures. The examples discussed herein are examples only and are provided to assist in the explanation of the apparatuses, devices, systems, and methods described herein. None of the features or components shown in the drawings or discussed below should be taken as mandatory for any specific implementation of any of these the apparatuses, devices, systems, or methods unless specifically designated as mandatory. For ease of reading and clarity, certain components, modules, or methods may be described solely in connection with a specific figure. In this disclosure, any identification of specific techniques, arrangements, etc. are either related to a specific example presented or are merely a general description of such a technique, arrangement, etc. Identifications of specific details or examples are not intended to be, and should not be, construed as mandatory or limiting unless specifically designated as such. Any failure to specifically describe a combination or sub-combination of components should not be understood as an indication that any combination or sub-combination is not possible. It will be appreciated that modifications to disclosed and described examples, arrangements, configurations, components, elements, apparatuses, devices, systems, methods, etc. can be made and may be desired for a specific application. Also, for any methods described, regardless of whether the method is described in conjunction with a flow diagram, it should be understood that unless otherwise specified or required by context, any explicit or implicit ordering of steps performed in the execution of a method does not imply that those steps must be performed in the order presented but instead may be performed in a different order or in parallel.

Throughout this disclosure, references to components or modules generally refer to items that logically can be grouped together to perform a function or group of related functions. Like reference numerals are generally intended to refer to the same or similar components. Components and modules can be implemented in software, hardware, or a combination of software and hardware. The term "software" is used expansively to include not only executable code, for example machine-executable or machine-interpretable instructions, but also data structures, data stores and computing instructions stored in any suitable electronic format, including firmware, and embedded software. The terms "information" and "data" are used expansively and includes a wide variety of electronic information, including executable code; content such as text, video data, and audio data, among others; and various codes or flags. The terms "information," "data," and "content" are sometimes used interchangeably when permitted by context.

It is intended that the specification and examples be considered as exemplary only, with a true scope and spirit of the disclosure being indicated by the following claims.

## Claims

1. A computer-implemented method for listing parts at an online platform prior to a dismantlement of an equipment, the method comprising:
receiving, from a first user device of an owner of the equipment, a request to list the equipment on the online platform prior to dismantling the equipment;
in response to the request to list the equipment, receiving, by one or more processors, one or more manifest data files associated with parts of the equipment;
generating, by the one or more processors, one or more listings at the online platform based on the received one or more manifest data files;
receiving, by the one or more processors, a conditional transaction request associated with the one or more listings from a second user device in communication with the online platform, to generate a conditional transaction; and
determining, by the one or more processors, a transaction status of the conditional transaction after the equipment has been dismantled.

2. The method of claim 1, wherein the generating the one or more listings at the online platform further comprises:
selecting, by the one or more processors, a set of parts to include in the one or more listings, wherein the set of parts are selected among the parts of the equipment; and
generating the one or more listings based on the set of parts.

3. The method of claim 2, wherein the generating the one or more listings at the online platform further comprises:
receiving a selection, from the first user device in communication with the online platform, to group the set of parts into one or more equipment subsystems; and
in response to the selection to group the set of parts into the one or more equipment subsystems, generating, by the one or more processors, the one or more listings based on the one or more equipment subsystems.

4. The method of claim 2, wherein the generating the one or more listings at the online platform further comprises:
receiving a selection, from the first user device in communication with the online platform, to group the set of parts into one or more equipment systems; and
in response to the selection to group the set of parts into the one or more equipment systems, generating, by the one or more processors, the one or more listings based on the one or more equipment systems.

5. The method of any preceding claim, wherein the receiving the conditional transaction request associated with the one or more listings further comprises accepting, by the one or more processors, a deposit payment from the second user device in communication with the online platform.

6. The method of any preceding claim, wherein the determining the transaction status of the conditional transaction comprises determining, by the one or more processors, for each of the one or more listings, at least one of: a final price for the listing, and a decision to scrap one or more parts listed in the listing.

7. The method of claim 6, wherein the final price for the listing is determined based on at least one of: a price indicated in one or more listings, a valuation result of each of the one or more parts of the equipment, a bid from a customer at the online platform, and an offer for negotiation by a buyer or a seller.

8. The method of claim 6, wherein the decision to scrap one or more parts listed in the listing is determined based on one or more detailed data files associated with the dismantlement of the equipment.

9. The method of claim 8, wherein, for each of the one or more listings, in response to the decision to scrap one or more parts in the listing, issuing, by one or more processors, a refund and/or a cancellation of the conditional transaction request to the second use device.

10. The method of any preceding claim, wherein the one or more manifest data files are received from a third user device of a third party entity, wherein the third party entity is distinct from the owner of the equipment.
